# EUROPÄISCHE PATENTSCHRIFT

(11) **EP 1 398 519 B1**
(45) Veröffentlichungstag und Bekanntmachung des Hinweises auf die Patenterteilung: **26.10.2005**
(21) Anmeldenummer: 02026125.1
(22) Anmeldetag: 23.11.2002
(51) Int. Cl.: F16D 25/10, F16D 25/12

(54) **Lamellenkupplung**
Multi-disc clutch
Embrayage multidisques

(30) Priorität: 12.09.2002 DE 10242288
(43) Veröffentlichungstag der Anmeldung: 17.03.2004
(73) Patentinhaber: ZF Sachs AG, 97424 Schweinfurt (DE)
(72) Erfinder: Strasser, Thomas, 97422 Schweinfurt (DE)

## Beschreibung

Die Erfindung bezieht sich auf eine Lamellenkupplung, deren Reibflächen mit einem steuerbaren Kühlölstrom ölgekühlt sind, die mit einem Außenlamellenträger mit Außenlamellen und einem ersten Anschlussglied zur Drehmomentübertragung, mit einem Innenlamellenträger mit Innenlamellen und einem zweiten Anschlussglied zur Drehmomentübertragung ausgestattet ist, für ein Zahnradgetriebe mit einer Mehrzahl von formschlüssigen Schaltkupplungen in einem Antriebsstrang eines Kraftfahrzeugs.

Es sind bereits Lamellenkupplungen bekannt (z. B. DE 198 30 951 A1), bei denen Außenlamellen, welche in einem Außenlamellenträger gehalten werden und Innenlamellen, die einem Innenlamellenträger zugeordnet sind, ein Lamellenpaket darstellen, welches mit Kühlöl gekühlt wird. Die Lamellenkupplung wird mittels eines Hydraulikkolbens betätigt. In der Kupplungseinrichtung ist ein Ventil vorgesehen, welches einen Fluidstrom zur Kühlung der Lamellen der Kupplung nur dann zu den Lamellen freigibt, wenn die Kupplung geschlossen wird oder ist. Dieses Ventil wird mittels des Hydraulikkolbens betätigt. Im geöffneten Zustand verschließt das Ventil den Zugang für den Fluidstrom zu den Lamellen. Nachteilig ist hierbei, dass der Kühlölstrom direkt von der Betätigungsstellung des Hydraulikkolbens abhängt. Somit kann der Kühlölstrom nicht abgeschaltet werden wenn die Kupplung geschlossen wird oder ist, und kann nicht aktiviert werden wenn die Lamellenkupplung komplett geöffnet ist. Weiterhin sind mechanische Ventile, welche den Kühlölfluss freigeben können, bekannt (z.B. EP 0 822 350 B1, EP 1 081 401 A2). Auch hier wird bei Betätigung des Kupplungskolbens in Richtung Einrücken des Lamellenpaketes der Kühlölkanal geöffnet. Es entsteht dabei der Vorteil, dass bei geöffneter Lamellenkupplung kein Kühlöl durch die Lamellen fließt und dabei ein Schleppmoment erzeugt. Nachteilig hierbei ist wiederum die direkte Abhängigkeit des Kühlölstromes von der Stellung des Betätigungskolbens.

Weiterhin sind mechanische Ventile bekannt, welche den Kühlölstrom unterbrechen, wenn die Kupplung komplett eingerückt ist (z. B. US 6 098 771, US 6 206 163 B1). Hierbei wird der Betätigungskolben der Lamellenkupplung hydraulisch zugedrückt, wobei bei ansteigendem Betätigungsdruck des Öls das mechanische Ventil geschlossen wird, sodass kein Kühlöl mehr durch das Lamellenpaket fließen kann. Nachteilig ist auch hier die direkte Abhängigkeit des Kühlölflusses von der Betätigungsstellung des Kupplungskolbens.

Aus der DE 198 00 490 A1 sind radial ineinander geschachtelte Lamellenkupplungen bekannt. Hierbei wird mittels eines Betätigungskolbens, der Kühlölstrom gezielt zu den einzelnen Lamellenpaketen gelenkt. Nachteilig ist auch hier wiederum, dass der Weg des Fluidstromes abhängig von der Betätigungsstellung des Druckkolbens ist.

Darüber hinaus ist aus der deutschen Anmeldeschrift der Anmelderin eine Lamellenkupplung für ein Kraftfahrzeuggetriebe bekannt (z. B. DE 101 28 856 A1), bei welcher das Kühlöl mittels einer Kühlölpumpe bereitgestellt wird. Hierbei kann das Volumen des Kühlölstromes mittels der regelbaren Ölförderpumpe gesteuert werden. Durch Abregeln der Ölförderpumpe kann der Kühlölfluss durch die Lamellen verringert oder komplett abgeschaltet werden. Die Förderleistung der Pumpe kann somit gezielt auf den Kühlöl-Volumenbedarf der Lamellenpakete eingestellt werden.

Hiervon ausgehend ist es Aufgabe der Erfindung, eine Steuerung eines Kühlölstromes einer Lamellenkupplung, welche einem Zahnradgetriebe mit einer Mehrzahl von formschlüssigen Schaltkupplungen zugeordnet ist, derart weiterzubilden, dass die Steuerung des Kühlölstromes der Lamellenkupplung abhängig vom gewünschten Schleppmoment der Lamellenkupplung erfolgt.

Zur Lösung dieser Aufgabe ist erfindungsgemäß vorgesehen, dass der Kühlölstrom in Abhängigkeit von Betriebsparametern des Fahrzeugs gesteuert wird. Besonders vorteilhaft ist, wenn der Kühlölstrom in Vorbereitung eines Schließens einer Schaltkupplung des Zahnradgetriebes abgeschaltet wird. Vorzugsweise wird der, Kühlölstrom abgeschaltet, indem eine Ölpumpe, welche durch eine Elektromaschine angetrieben wird, abgeschaltet wird. In einer weiteren günstigen Ausgestaltung ist vorgesehen, dass der Kühlölstrom, welcher von einer verbrennungsmotorisch angetriebenen Ölpumpe geliefert wird, durch Schalten eines Wegeventils umgelenkt wird und nicht mehr durch das Lamellenpaket fließt. Vorzugsweise ist eine Steuereinheit vorgesehen, welche Schaltsignale empfangen kann und daraufhin den Kühlölstrom abschalten kann. Nach einem weiteren wesentlichen Merkmal der Erfindung wird nach dem Schließen der Schaltkupplung des Zahnradgetriebes der Kühlölstrom durch die Lamellenkupplung mittels der Steuereinheit wieder angeschaltet.

Eine weitere günstige Ausführungsform sieht vor, dass die Lamellenkupplung in einer Mehrfachkupplungseinrichtung mit mindestens zwei Lamellenkupplungen angeordnet ist, und dass das Zahnradgetriebe als lastschaltbares Doppelkupplungsgetriebe ausgebildet ist. Vorteilhaft bei dieser Ausführungsform ist eine Anordnung der Lamellenkupplung radial übereinander, wobei der Kühlölstrom die Lamellenkupplungen von radial innen nach radial außen durchströmt.

Eine vorteilhafte Ausgestaltung der Schaltkupplungen des Zahnradgetriebes sieht eine konusförmige Ausgestaltung der Schaltkupplungen vor. Zum Einlegen einer neuen Übersetzungsstufe des Zahnradgetriebes werden die Schaltpakete axial verschoben, wobei die Synchronisierung der Drehzahlen der Getriebeeingangswelle mit der Drehzahl des Losrades der einzulegenden Übersetzungsstufe kraftschlüssig erfolgt. Erst nach erfolgter Synchronisation wird die Schaltkupplung vollständig eingerückt, wobei das Losrad formschlüssig mit der ihm zugehörigen Welle verbunden wird. Um die Schaltkupplungen zu schonen, müssen die Synchronkräfte möglichst gering gehalten werden. Dazu ist es notwendig, das Schleppmoment, welches auch bei geöffneter Lamellenkupplung durch durchfließendes Kühlöl entsteht und auf die Getriebewelle übertragen wird, zu minimieren. Erfindungsgemäß ist vorgesehen, dass bei einem Gangwechsel des Getriebes in Vorbereitung des Gangswechsels der Kühlölstrom abgeschaltet und die Lamellenkupplung geöffnet wird. Zum Wechsel der Übersetzungsstufe wird der alte Gang mittels Öffnen der ihm zugeordneten Schaltkupplung ausgelegt, und der neue Gang durch Schließen der ihm zugeordneten Schaltkupplung eingelegt. Anschließend wird der Kühlölstrom wieder zugeschaltet und die Lamellenkupplung geschlossen.

Die Erfindung betrifft ferner ein Verfahren zum Betrieb eines zu einem Kraftfahrzeug gehörenden Antriebsstrangs, der ölgekühlte Reibflächen einer Lamellenkupplung aufweist, welche sich zwischen einer Antriebseinheit und einem Zahnradgetriebe befindet.
Erfindungsgemäß ist dabei vorgesehen, dass der Kühlölstrom in Vorbereitung eines Schließens einer Schaltkupplung des Zahnradgetriebes abgeschaltet wird.

Entspricht die Drehzahl der zu synchronisierenden drehenden Getriebeteile und dem getriebeseitig angeordneten Lamellenträger und seinen Lamellen im Wesentlichen der Drehzahl der Synchrondrehzahl der einzulegenden Gangstufe, kann natürlich auf das Abschalten des Kühlölstroms verzichtet werden, da die Schleppmomente der Lamellen nicht wesentlich zur aufzubringenden Synchronleistung beitragen. In einem weiteren erfindungsgemäßem Verfahren wird der Kühlölvolumenfluss in Abhängigkeit von der Differenz der momentanen Drehzahl der zu synchronisierenden drehenden Getriebeteile zur Synchrondrehzahl gesteuert. Die Getriebespreizung zwischen höheren benachbarten Gängen, z. B. dem fünften Gang und dem sechsten Gang, ist im Allgemeinen geringer als zwischen niedrigeren benachbarten Gängen. Dadurch kann durch die geringere zu synchronisierende Differenzdrehzahl ein Absenken des Kühlölflusses ausreichen um die Synchronkraft beim Einlegen der neuen Gangstufe unter einen Schwellwert zu senken, ohne dass ein komplettes Abschalten des Kühlölflusses notwendig ist. Auch ist es natürlich klar, dass weitere Faktoren, welche die Größe des Schleppmoments bestimmen, wie zum Beispiel die Kühlöltemperatur von der Steuereinheit verarbeitet werden und die Steuerung des Kühlölflusses beeinflussen. So wird erfindungsgemäß der Kühlölstrom bei relativ kaltem Kühlöl, welches ein höheres Schleppmoment erzeugt als wärmeres, eher komplett abgeschaltet als bei sich auf Betriebstemperatur befindlichem Kühlöl.

Bevorzugte Ausführungsbeispiele sind in den Figuren schematisch dargestellt.

Es zeigt:
- Fig. 1: Eine schematische Darstellung eines Antriebsstrangs eines Kraftfahrzeuges mit Lamellenkupplung und Zahnradgetriebe, eine zugehörige Kühlölversorgung und eine dazugehörige Steuereinheit;
- Fig. 2: einen Antriebsstrang eines Kraftfahrzeuges mit einem Doppelkupplungsgetriebe und zugehöriger Mehrfachkupplungseinrichtung, sowie zugehöriger Ölversorgung.

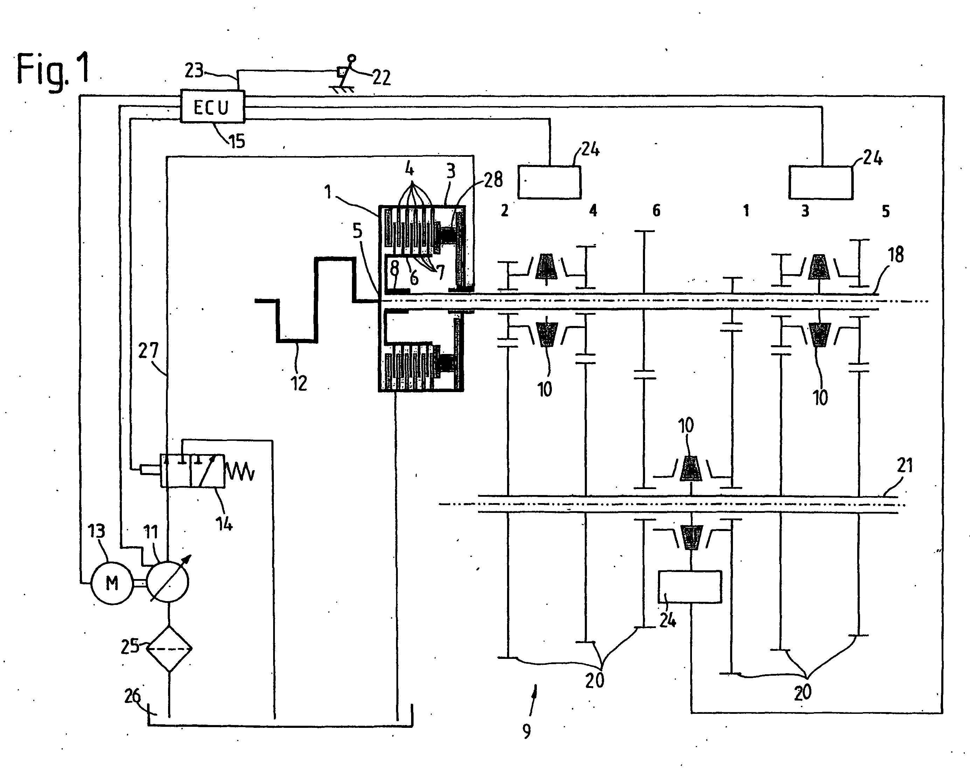

In Fig. 1 ist in schematischer Darstellung ein Motor 12 eines Kraftfahrzeuges dargestellt, welcher über die Lamellenkupplung 1 Drehmoment an das Zahnradgetriebe 9 übertragen kann. Hierzu ist der Verbrennungsmotor 12 durch ein erstes Anschlussglied 5 mit dem Außenlamellenträger 3 der Lamellenkupplung 1 verbunden. Im Außenlamellenträger 3 sind die Außenlamellen 4 formschlüssig angeordnet. Auf dem Innenlamellenträger 6 sitzen die Innenlamellen 7, welche mit den Außenlamellen 4 ein Lamellenpaket bilden. Der Innenlamellenträger 6 ist über das Anschlussglied 8 mit der Getriebeeingangswelle 18 fest verbunden. Die Außen- und Innenlamellen 4, 7 sind abwechselnd angeordnet und können mittels des Kolbens 28 zusammengedrückt werden. Der Kolben 28 wir üblicherweise hydraulisch betätigt, wozu eine nicht dargestellte Druckölversorgung dient. Das Lamellenpaket kann aber auch elektromechanisch zusammengedrückt werden. Bei Betätigung der Lamellenkupplung wird über die Reibflächen 2 der Außenlamellen 4 und der Innenlamellen 7 Drehmoment auf die Getriebeeingangswelle 18 übertragen. Parallel zur Getriebeeingangswelle 18 ist die Getriebeausgangswelle 21 angeordnet. Die Zahnräder, welche auf der Getriebeeingangswelle 18 und der Getriebeausgangswelle 21 sitzen und miteinander kämmen, bilden die Übersetzungsstufen 20. Hierbei ist jeweils ein Zahnrad als Hohlrad ausgebildet, welches mittels den Schaltkupplungen 10 formschlüssig mit der Welle verbunden werden kann, auf welcher es sitzt. Die Schaltkupplungen 10 des dargestellten automatisierten Antriebsstranges werden mittels Getriebeaktuatoren 24, welche nicht näher dargestellt sind, geschaltet. Hierbei werden die Schaltkupplungen 10 axial auf der Getriebeeingangswelle 18 bzw. Getriebeausgangswelle 21 verschoben. Zur Betätigung der Getriebeaktuatoren 24 ist eine elektronische Steuereinrichtung (ECU) 15 vorgesehen. Die Steuereinrichtung 15 ist über Signalleitungen 23 mit den Getriebeaktuatoren 24 als auch mit der Kühlölversorgung sowie mit dem Schalthebel 22 verbunden. Die Steuereinheit kann sowohl Signale, wie z. B. Schaltsignale, welche vom Schalthebel 22 initiiert werden erhalten und verarbeiten, sowie mittels Steuersignalen die Getriebeaktuatoren ansteuern. Üblicherweise können Schaltsignale manuell vom Fahrer mittels des Schalthebels initiiert werden, oder aber im Falle eines automatischen Fahrmodus werden die Schaltsignale automatisch in Abhängigkeit von Fahrparametern generiert. Die Kühlölversorgung besteht im Wesentlichen aus einem Ölsumpf 26, aus welchem mittels einer Ölpumpe 11 über einen Ölfilter 25 mittels Ölleitungen 27 Kühlöl in die Lamellenkupplung gefördert werden kann. In der Fig. 1 dient eine Elektromaschine 13 als Antrieb der Ölpumpe 11. Die Ölpumpe kann aber auch über Zahnräder verbrennungsmotorisch vom Fahrzeugmotor angetrieben werden. Der Ölpumpe 11, welche hier als regelbare Pumpe ausgebildet ist, ist ein Wegeventil 14 nachgeschaltet. Das Wegeventil 14 wird von der Steuereinheit 15 angesteuert, und kann im Wesentlichen in zwei Schaltstellungen geschaltet werden. In der ersten Schaltstellung wird die Ölpumpe 11 über eine Ölleitung 27 mit der Lamellenkupplung 1 verbunden. In der zweiten Schaltstellung fördert die Ölpumpe 11 das ÖI zurück in den Ölsumpf 26. Durch Schalten des Wegeventils 14 kann also ein Kühlölstrom durch die Lamellenkupplung 1 freigeschaltet oder gesperrt werden. Um den Kühlölstrom durch die Lamellenkupplung 1 abzuschalten, ist es aber auch möglich, die Ölpumpe 11 mittels der Steuereinheit 15 direkt abzuschalten. In der hier dargestellten Ausführungsvariante kann mittels der Steuereinheit sowohl die Elektromaschine 13 als auch die regelbare Pumpe 11 sowie das Wegeventil 14 beeinflusst werden. Selbstverständlich sind nicht alle hier gezeigten Möglichkeiten, den Kühlölstrom abzuschalten, in Kombination nötig, um dies zu bewerkstelligen. Zum Anfahren des Fahrzeuges bei eingelegtem Anfahrgang wird mittels der Ölpumpe 11 und durchgeschaltetem Wegeventil 14 ein Kühlölstrom aktiviert. Das Kühlöl tritt über eine hier nicht näher dargestellte Drehdurchführung in die rotierende Lamellenkupplung 1 ein und durchströmt diese von radial innen nach radial außen, wobei durch geschicktes Leiten des Kühlöls sämtliche Reibflächen 2 des Lamellenpaketes durchströmt werden. Zum Anfahren wird die Lamellenkupplung mittels des Kupplungskolbens 28 betätigt, wobei die Reibflächen 2 der Außenlamellen 4 und der Innenlamellen 7 aneinander reiben und somit Drehmoment auf das Zahnradgetriebe 9 übertragen wird. Die dabei entstehende Reibleistung in Form von Wärme wird vom durchfließenden Kühlöl aufgenommen, wobei sich dieses erwärmt. Das erwärmte Kühlöl wird zurück in den Ölsumpf 26 geleitet. Reibleistung, welche abgeführt werden muss, entsteht so lange, solange die Lamellenkupplung 1 im Schlupf betrieben wird; die Außenlamellen 4, welche mit Motordrehzahl drehen, somit eine andere Drehzahl haben als die Innenlamellen 7. Zum Schalten in einen weiteren Gang wird mittels des Schalthebels 22 ein Schaltsignal an die Steuereinheit 15 übergeben. Diese schaltet erfindungsgemäß mittels des Wegeventils 14 oder durch Abschalten des Elektromotors 13 oder der Ölpumpe 11 den Kühlölstrom durch die Lamellenkupplung 1 ab und betätigt den Kolben 28 in Richtung Öffnen des Lamellenpaketes der Lamellenkupplung 1. Der alte Gang wird mittels seiner zugeordneten Schaltkupplung und des zugeordneten Getriebeaktuators 24 ausgelegt. Durch das Abschalten des Kühlölstroms fließt kein Kühlöl mehr zwischen den Reibflächen 2 der Lamellenkupplung 1 entlang und verursacht dadurch Schleppmomente, welche auf die Getriebeeingangswelle 18 übertragen werden. Zum Einlegen der neuen Übersetzungsstufe wird mittels der Steuereinheit 15 der zugehörige Getriebeaktuator 24 der Schaltkupplung 10 in Richtung Einrücken verschoben, welcher der neuen Übersetzungsstufe zugeordnet ist. Die hier symbolhaft dargestellten Schaltkupplungen 10 sind konusförmig ausgebildet und stellen Synchronisierungen dar, welche über konusförmig ausgebildete Reibflächen die Drehzahlen des Losrades und der zugehörigen Getriebewelle synchronisieren. Bei Drehzahlgleichheit des Losrades und der Getriebewelle wird dieses durch weiteres axiales Verschieben der Schaltkupplung 10 mit der Getriebewelle formschlüssig verbunden. Anschließend wird der Kühlölstrom mittels der Steuereinheit 15 wieder aktiviert und der Kolben 28 wird in Richtung Schließen der Lamellenkupplung 1 angesteuert.

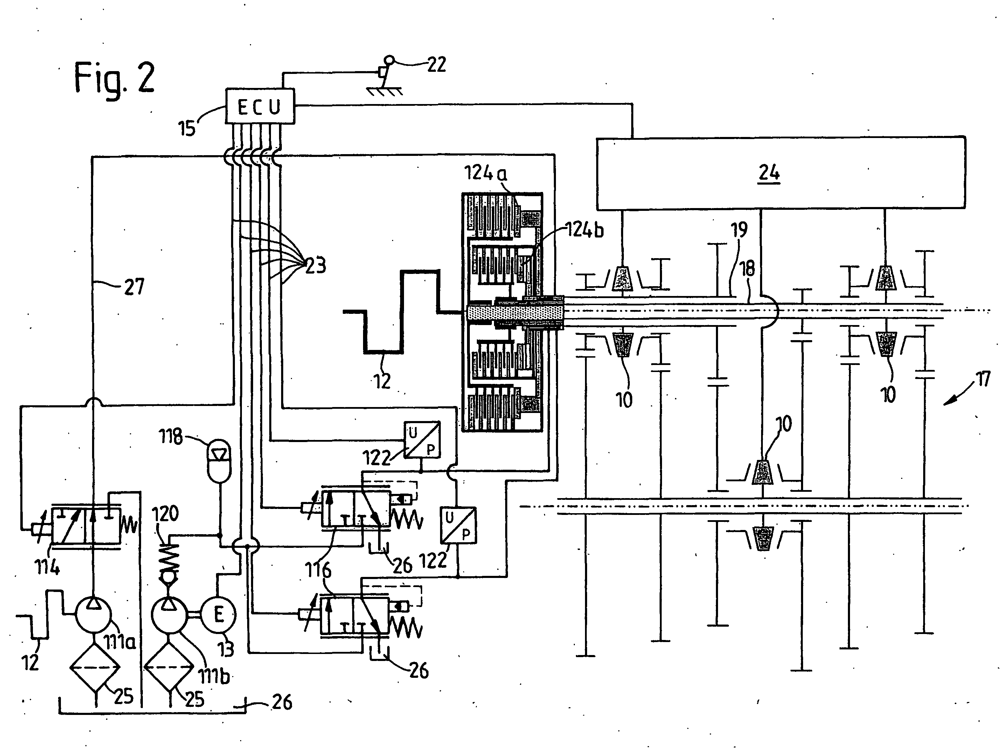

In Fig. 2 ist der Antriebsstrang eines Kraftfahrzeuges gezeigt, welcher ein automatisiertes, lastschaltbares Doppelkupplungsgetriebe 17 sowie eine Mehrfachkupplungseinrichtung 16 aufweist. Hierbei sind in der Mehrfachkupplungseinrichtung 16 zwei Lamellenkupplungen radial ineinander geschachtelt, wobei jede einer Getriebeeingangswelle zugeordnet ist. Hierbei ist die radial äußere Lamellenkupplung 1 mit der inneren Getriebeeingangswelle 18 verbunden und die innere Lamellenkupplung ist mit der äußeren als Hohlwelle 19 ausgebildeten Getriebeeingangswelle verbunden. Die Übersetzungsstufen der ungeraden Gänge (1, 3, 5) werden mittels der inneren Lamellenkupplung 1 mit dem Verbrennungsmotor 12 verbunden. Die geraden Übersetzungsstufen (2, 4, 6) sind der radial äußeren Lamellenkupplung 1 zugeordnet. Das Kühlöl wird mittels einer Ölpumpe 111a, welche durch den Verbrennungsmotor 12 angetrieben wird, aus dem Ölsumpf 26, den Filter 25, mittels einem proportionalem Wegeventil 114 über eine nicht näher dargestellte Drehdurchführung zwischen der Mehrfachkupplungseinrichtung 16 und dem Doppelkupplungsgetriebe 17 in die Mehrfachkupplungseinrichtung 16 radial innen eingeleitet. Das Proportionalventil 114 ist über eine Signalleitung 23 mit der Steuereinheit 15 verbunden und wird von dieser angesteuert. Zum Kühlen der Reibflächen durchfließt es von radial innen nach radial außen die beiden Lamellenkupplungen 1 nacheinander. Dem Fachmann ist natürlich bekannt, dass man das Kühlöl mittels geeigneter Fluidleitanordnungen auch gezielt zu den zu kühlenden Lamellen führen kann. Zum Betätigen der Lamellenkupplungen 1 wird in bekannter Weise Drucköl über die Drehdurchführung in Kolbenräume der Kupplung eingeleitet, wodurch ein Betätigungskolben 124 a, b die Lamellenpakete, welche aus den Außen-, und Innenlamellen 7,4 gebildet werden, zusammendrückt. Das Drucköl wird über eine elektromotorisch angetriebene Druckölpumpe 111 b gefördert. Als Antrieb dient hierzu eine Elektromaschine 13, welche mit der ECU 15 verbunden ist und von dieser angesteuert wird. Die Pumpe fördert das Drucköl über ein Rückschlagventil 120 in einen hydraulischen Speicher 118, von wo aus es zu den proportionalen Druckregelventilen 116 gelangt. Weiterhin sind Drucksensoren 122 vorgesehen, welche den aktuellen Druck in den Kolbenräumen der Kupplungseinrichtung 16 an die ECU weitergeben. Diese kann mittels den generierten Druckwerten die Druckregelventile 116 ansteuern, mit welchen sie in elektrischer Verbindung über Signalleitungen steht.

Wird ein Schaltsignal generiert, z.B. mittels des Schalthebels 2, wird mittels der elektronischen Steuereinrichtung 15 das Proportionalventil 114 so geschaltet, dass die Ölpumpe 111 a das Öl im wesentlichen drucklos zurück in den Ölsumpf 26 fördert. Die Lamellenkupplung, welche der zu schaltenden Gangstufe zugeordnet ist, wird mittels Ansteuerung des zugehörigen proportionalen Druckregelventil 116 geöffnet, und die einzulegende Gangstufe mittels der zugehörigen Schaltkupplung 10 durch den Getriebeaktuator 24 eingelegt. Anschließend wird der Kühlölstrom durch Ansteuern des Ventils 114 wieder angeschaltet und eine Überschneidungsschaltung der beiden Lamellenkupplungen 1 durchgeführt. Hierbei wird durch Ansteuern der beiden Druckregelventile 116 die Lamellenkupplung 1 des neuen Ganges geschlossen und zeitgleich die Lamellenkupplung des alten Ganges geöffnet. Anschließend kann der alte Gang ausgelegt werden.

Wird mittels der elektronischen Steuereinrichtung 15 eine Störung der Betätigungseinrichtung der Kupplungseinrichtung 16 erkannt, so steuert die Steuereinrichtung 15 das Wegeventil 114 erfindungsgemäß an, dass der Kühlölstrom zur Lamellenkupplung geleitet wird. Eine Funktionsstörung der Betätigungseinrichtung kann z. B. über die Drucksensoren 122 erkannt werden. In diesem Fall liefern die Drucksensoren Druckwerte, welche geringer sind als die einzustellenden Drücke in den Kolbenräumen der Lamellenkupplung 1. Die Ursache für solche Funktionsstörungen kann z. B. eine fehlerhafte Verbindung der Steuereinrichtung 15 mit den Druckregelventilen 26 sein. Weiterhin kann eine fehlerhafte Ansteuerung der Elektromaschine 13 oder ein Komplettaufall derselben die Ursache für die Funktionsstörung sein. Um dennoch eine Drehmomentübertragung zwischen dem Verbrennungsmotor 12 und den Antriebsrädern des Kraftfahrzeuges herzustellen und dieses in einem Notfahrbetrieb fortbewegen zu können, wird das Schleppmoment des Kühlöls, welches auf die getriebeseitig angeordneten Innenlamellen 7 wirkt, genutzt. Je größer der Kühlölstrom eingestellt wird, desto größer ist auch das resultierende Schleppmoment. Demnach ist es sinnvoll, den Kühlölstrom bei Funktionsausfall der Betätigungseinrichtung zu maximieren. Weiterhin ist das proportionale Wegeventil 114 so eingebaut, dass es im stromlosen Zustand so geschaltet ist, dass es den Kühlölstrom zur Mehrfachkupplungseinrichtung 16 leitet. So kann auch bei einem Totalausfall der elektronischen Steuereinheit 15, bei welcher das Wegeventil 114 nicht mehr angesteuert werden kann, eine Notfahrfunktionalität sichergestellt werden. Die verbrennungsmotorisch angetriebene Kühlölpumpe 111 a fördert hierbei das Kühlöl automatisch zu den Lamellenpaketen.

Es ist weiterhin vorgesehen, dass das Schleppmoment nicht nur bei einer Funktionsstörung der Betätigungseinrichtung zur Drehmomentübertragung dient, sondern auch bei Vorliegen weiterer Betriebsparameter des Kraftfahrzeuges. Zum Beispiel kann bei Ankriechvorgängen oder Anrollvorgängen des Kraftfahrzeuges das mit dem Kühlöl erzeugte Schleppmoment dazu dienen, das von der Betätigungseinrichtung eingestellte Druckmoment der Kupplungseinrichtung genauer einzuregeln. Dies wird dadurch realisiert, dass die Größe des durch die Lamellen 4,7 fließenden Kühlölstrom mittels des Wegeventils 114 eingestellt wird.

### Bezugszeichenliste

- 1.: Lamellenkupplung
- 2.: Reibflächen
- 3.: Außenlamellenträger
- 4.: Außenlamellen
- 5.: Anschlussglied
- 6.: Innenlamellenträger
- 7.: Innenlamellen
- 8.: Anschlussglied
- 9.: Zahnradgetriebe
- 10.: Schaltkupplungen
- 11.: Ölpumpe
- 12.: Verbrennungsmotor
- 13.: Elektromaschine
- 14.: Wegeventil
- 15.: elektronische Steuereinheit
- 16.: Mehrfach-Kupplungseinrichtung
- 17.: Doppelkupplungsgetriebe
- 18.: Getriebeeingangswelle
- 19.: Hohlwelle
- 20.: Übersetzungsstufen
- 21.: Getriebeausgangswelle
- 22.: Schalthebel
- 23.: Signalleitung
- 24.: Getriebeaktuator
- 25.: Ölfilter
- 26.: Ölsumpf
- 27.: Ölleitung
- 28.: Kolben
- 111a.: Kühlölpumpe
- 111b.: Druckölpumpe
- 114.: proportionales Wegeventil
- 116: proportionales Druckregelventil
- 118.: Hydraulikspeicher
- 120.: Rückschlagventil
- 122.: Drucksensor
- 124.: Druckkolben

## Patentansprüche

1. Übertragungssystem mit einer Lamellenkupplung (1) mit einem Kühlkreis und einem Zahnradgetriebe (9) mit einer Mehrzahl von formschlüssigen Schaltkupplungen (10) in einem Antriebsstrang eines Kraftfahrzeugs, wobei die Lamellenkupplung einen Außenlamellenträger (3) mit Außenlamellen (4) und einem ersten Anschlussglied (5) zur Drehmomentübertragung, mit einem Innenlamellenträger (6) mit Innenlamellen (7) und einem zweiten Anschlussglied (8) zur Drehmomentübertragung aufweist und wobei die Reibflächen (2) der Lamellenkupplung (1) mit einem in Abhängigkeit von Betriebsparametern des Kraftfahrzeugs steuerbaren Kühlölstrom gekühlt werden,
**dadurch gekennzeichnet,**
**dass** der Kühlölstrom in Vorbereitung eines Schließens einer Schaltkupplung (10) des Zahnradgetriebes (9) abgeschaltet oder zumindest reduziert wird.

2. Übertragungssystem nach Anspruch 1,
**dadurch gekennzeichnet,**
**dass** der Kühlölstrom mittels einer Ölpumpe (11) bereitgestellt wird, welche durch den Verbrennungsmotor (12) des Kraftfahrzeugs oder durch eine separate Elektromaschine (13) angetrieben wird.

3. Übertragungssystem nach Anspruch 2,
**dadurch gekennzeichnet,**
**dass** der Kühlölstrom durch die Lamellenkupplung (1) durch Abschalten des Ölpumpenantriebs oder/und durch Schalten eines Wegeventils (14) abgeschaltet wird.

4. Übertragungssystem nach Anspruch 1,
**dadurch gekennzeichnet,**
**dass** der Kühlölstrom und die Betätigung der Schaltkupplungen (10) von einer elektronischen Steuereinheit (15) gesteuert wird.

5. Übertragungssystem nach Anspruch 4,
**dadurch gekennzeichnet,**
**dass** die Steuereinheit (15) Schaltsignale empfangen kann und daraufhin den Kühlölstrom durch die Lamellenkupplung (1) abschaltet.

6. Übertragungssystem nach Anspruch 1,
**dadurch gekennzeichnet,**
**dass** nach dem Schließen einer Schaltkupplung (10) der Kühlölstrom durch die Lamellenkupplung (1) wieder angeschaltet wird.

7. Übertragungssystem nach Anspruch 1,
**dadurch gekennzeichnet,**
**dass** die Lamellenkupplung (1) in einer Mehrfach-Kupplungseinrichtung (16) mit mindestens zwei Lamellenkupplungen (1) angeordnet ist, und dass das Zahnradgetriebe (9) als lastschaltbares Doppelkupplungsgetriebe (17) ausgebildet ist.

8. Übertragungssystem nach Anspruch 7,
**dadurch gekennzeichnet,**
**dass** mindestens zwei Lamellenkupplungen (1) radial übereinander angeordnet sind und das der Kühlölstrom die Lamellenkupplungen (1) von radial innen nach radial außen durchströmt.

9. Übertragungssystem nach Anspruch 1,
**dadurch gekennzeichnet,**
**dass** die Betriebsparameter des Kraftfahrzeugs Schaltvorgänge, Kuppelvorgänge, Anfahrvorgänge, Anrollvorgänge oder Kriechvorgänge sind.

10. Verfahren zum Betrieb eines zu einem Antriebsstrang eines Kraftfahrzeug gehörenden Antriebsstrangs, der aufweist:
eine Antriebseinheit (12), gegebenenfalls in Form eines Verbrennungsmotors (12), ein Zahnradgetriebe (9) mit einer Mehrzahl von formschlüssigen Schaltkupplungen (10) und mindestens eine, mit einem steuerbaren Kühlölstrom ölgekühlte Lamellenkupplung (1) mit einem Außenlamellenträger (3) mit Außenlamellen (4) und einem ersten Anschlussglied (5) zur Drehmomentübertragung und mit einem Innenlamellenträger (6) mit Innenlamellen (7) und einem zweiten Anschlussglied (8) zur Drehmomentübertragung
**dadurch gekennzeichnet,**
**dass** der Kühlölstrom in Vorbereitung eines Schließens einer Schaltkupplung (10) des Zahnradgetriebes (9) abgeschaltet oder zumindest reduziert wird.

11. Verfahren nach Anspruch 10,
**dadurch gekennzeichnet,**
**dass** eine elektronische Steuereinheit (15) den Kühlölstrom entlang Reibflächen (2) der Lamellenkupplung (1) in Reaktion auf ein Schaltsignal abschaltet.

12. Verfahren nach Anspruch 11,
**dadurch gekennzeichnet,**
**dass** die elektronische Steuereinheit (15) das Abschalten des Kühlölstroms und anschließend das Schließen der Schaltkupplung (10) bewirkt.

## Claims

1. Transmission system having a multiple disc clutch (1) with a cooling circuit, and having a gear mechanism (9) with a plurality of form-fitting clutches (10) in a drive train of a motor vehicle, the multiple disc clutch having an outer disc carrier (3) with outer discs (4) and a first connecting member (5) for the transmission of torque, having an inner disc carrier (6) with inner discs (7) and a second connecting member (8) for the transmission of torque, and the friction faces (2) of the multiple disc clutch (1) being cooled by a flow of cooling oil which can be controlled as a function of operating parameters of the motor vehicle, **characterized in that** the flow of cooling oil is switched off or at least reduced in preparation for the closure of a clutch (10) of the gear mechanism (9).

2. Transmission system according to Claim 1,
**characterized in that** the flow of cooling oil is provided by means of an oil pump (11) which is driven by the internal combustion engine (12) of the motor vehicle or by a separate electric machine (13).

3. Transmission system according to Claim 2,
**characterized in that** the flow of cooling oil through the multiple disc clutch (1) is switched off by the oil-pump drive being switched off and/or by a directional valve (14) being switched.

4. Transmission system according to Claim 1,
**characterized in that** the flow of cooling oil and the actuation of the clutches (10) is controlled by an electronic control unit (15).

5. Transmission system according to Claim 4,
**characterized in that** the control unit (15) can receive switching signals and thereupon switches off the flow of cooling oil through the multiple disc clutch (1).

6. Transmission system according to Claim 1,
**characterized in that**, after a clutch (10) has been closed, the flow of cooling oil through the multiple disc clutch (1) is switched on again.

7. Transmission system according to Claim 1,
**characterized in that** the multiple disc clutch (1) is arranged in a multiple clutch device (16) having at least two multiple disc clutches (1), and **in that** the gear mechanism (9) is configured as a power-shift dual-clutch gear mechanism (17).

8. Transmission system according to Claim 7,
**characterized in that** at least two multiple disc clutches (1) are arranged radially above one another, and **in that** the flow of cooling oil flows through the multiple disc clutches (1) from the radial inside to the radial outside.

9. Transmission system according to Claim 1,
**characterized in that** the operating parameters of the motor vehicle are gear-shift processes, clutch processes, starting-up processes, driving-off processes or crawling processes.

10. Method for operating a drive train which belongs to a drive train of a motor vehicle and has the following:
a drive unit (12), optionally in the form of an internal combustion engine (12), a gear mechanism (9) with a plurality of form-fitting clutches (10), and at least one multiple disc clutch (1) which is oil-cooled by a controllable flow of cooling oil and has an outer disc carrier (3) with outer discs (4) and a first connecting member (5) for the transmission of torque, and has an inner disc carrier (6) with inner discs (7) and a second connecting member (8) for the transmission of torque, **characterized in that** the flow of cooling oil is switched off or at least reduced in preparation for the closure of a clutch (10) of the gear mechanism (9).

11. Method according to Claim 10, **characterized in that** an electronic control unit (15) switches off the flow of cooling oil along friction faces (2) of the multiple disc clutch (1) in reaction to a switching signal.

12. Method according to Claim 11, **characterized in that** the electronic control unit (15) switches off the flow of cooling oil and subsequently closes the clutch (10).

## Revendications

1. Système de transmission avec un embrayage multidisques (1) pourvu d'un circuit de refroidissement et avec une boîte de vitesses (9) à engrenages pourvue d'une pluralité d'embrayages de commutation (10) à entraînement instantané dans une ligne d'entraînement d'un véhicule automobile, sachant que l'embrayage multidisques présente un porte-disques extérieur (3) pourvu de disques extérieurs (4) et d'un premier élément de raccordement (5) pour la transmission de couple, et un porte-disques intérieur (6) pourvu de disques intérieurs (7) et d'un deuxième élément de raccordement (8) pour la transmission de couple, et sachant que les surfaces de friction (2) de l'embrayage multidisques (1) sont refroidies par un flux d'huile de refroidissement pouvant être commandé en fonction de paramètres de fonctionnement du véhicule automobile,
**caractérisé en ce que** le flux d'huile de refroidissement est mis hors circuit ou au moins réduit en préparation d'une fermeture d'un embrayage de commutation (10) de la boîte de vitesses (9) à engrenages.

2. Système de transmission selon la revendication 1,
**caractérisé en ce que** le flux d'huile de refroidissement est fourni au moyen d'une pompe à huile (11) qui est entraînée par le moteur thermique (12) du véhicule automobile ou par un moteur électrique (13) séparé.

3. Système de transmission selon la revendication 2,
**caractérisé en ce que** le flux d'huile de refroidissement à travers l'embrayage multidisques (1) est mis hors circuit en désactivant l'entraînement de la pompe à huile et/ou en commutant un distributeur (14) à plusieurs voies.

4. Système de transmission selon la revendication 1,
**caractérisé en ce que** le flux d'huile de refroidissement et l'actionnement des embrayages de commutation (10) sont commandés par une unité de commande électronique (15).

5. Système de transmission selon la revendication 4,
**caractérisé en ce que** l'unité de commande (15) peut recevoir des signaux de commutation, à la suite de quoi elle met hors circuit le flux d'huile de refroidissement à travers l'embrayage multidisques (1).

6. Système de transmission selon la revendication 1,
**caractérisé en ce que** le flux d'huile de refroidissement à travers l'embrayage multidisques (1) est remis en circuit à la suite de la fermeture d'un embrayage de commutation (10).

7. Système de transmission selon la revendication 1,
**caractérisé en ce que** l'embrayage multidisques (1) est disposé dans un dispositif d'embrayage multiple (16) pourvu d'au moins deux embrayages multidisques (1), et **en ce que** la boîte de vitesses (9) à engrenages est réalisée sous la forme d'une boîte de vitesses (17) à double embrayage à commutation en charge.

8. Système de transmission selon la revendication 7,
**caractérisé en ce qu'**au moins deux embrayages multidisques (1) sont disposés en superposition radiale, et **en ce que** le flux d'huile de refroidissement traverse les embrayages multidisques (1) radialement de l'intérieur vers l'extérieur.

9. Système de transmission selon la revendication 1,
**caractérisé en ce que** les paramètres de fonctionnement du véhicule automobile sont des processus de commutation, des processus d'embrayage, des processus de démarrage, des processus de mise en mouvement ou des processus d'avance lente.

10. Procédé d'exploitation d'une ligne d'entraînement qui fait partie d'une ligne d'entraînement d'un véhicule automobile et qui présente:
une unité d'entraînement (12), éventuellement sous la forme d'un moteur thermique (12), une boîte de vitesses (9) à engrenages pourvue d'une pluralité d'embrayages de commutation (10) à entraînement instantané, et au moins un embrayage multidisques (1) refroidi par huile par un flux d'huile de refroidissement pouvant être commandé et pourvu d'un porte-disques extérieur (3) avec des disques extérieurs (4) et avec un premier élément de raccordement (5) pour la transmission de couple et d'un porte-disques intérieur (6) avec des disques intérieurs (7) et avec un deuxième élément de raccordement (8) pour la transmission de couple,
**caractérisé en ce que** le flux d'huile de refroidissement est mis hors circuit ou au moins réduit en préparation d'une fermeture d'un embrayage de commutation (10) de la boîte de vitesses (9) à engrenages.

11. Procédé selon la revendication 10, **caractérisé en ce qu'**une unité de commande électronique (15) met hors circuit le flux d'huile de refroidissement le long de surfaces de friction (2) de l'embrayage multidisques (1) en réaction à un signal de commutation.

12. Procédé selon la revendication 11, **caractérisé en ce que** l'unité de commande électronique (15) produit la mise hors circuit du flux d'huile de refroidissement puis la fermeture de l'embrayage de commutation (10).
